# EUROPEAN PATENT APPLICATION

(11) **EP 4 535 278 A1**
(43) Date of publication of application: **09.04.2025**
(21) Application number: 23829883.0
(22) Date of filing: 06.06.2023
(51) Int. Cl.: G06T 1/20

(54) **METHOD FOR PROCESSING SHADER INPUT DATA, AND GRAPHICS PROCESSING APPARATUS**

(30) Priority: 28.06.2022 CN 202210744371
(71) Applicant: Huawei Technologies Co., Ltd., Shenzhen, Guangdong 518129 (CN)
(72) Inventor: PENG, Zhenghong, Shenzhen, Guangdong 518129 (CN); ZHAO, Zhiliang, Shenzhen, Guangdong 518129 (CN)
(74) Representative: Gill Jennings & Every LLP
(86) International application number: PCT/CN2023/098683
(87) International publication number: WO 2024/001699

(57) **Abstract**

Embodiments of this application provide a shader input data processing method and a graphics processing apparatus, and relate to the field of chip technologies, so that in an image processing process, read/write power consumption of a GPR in a GPU can be reduced, a computing amount of an ALU can be reduced, and PPA of the GPU can be improved. A specific solution is as follows: The graphics processing apparatus includes a shader, a memory management unit, and a coprocessor connected between the shader and the memory management unit; the shader is configured to send a read instruction to the memory management unit, where the read instruction includes an address of a to-be-read first operand and a first identifier, and the first identifier indicates to perform an operation on the first operand in the coprocessor; the memory management unit is configured to obtain the first operand from a first memory, and send the first operand to the coprocessor; and the coprocessor is configured to perform the operation on the first operand, to obtain an operation result. Embodiments of this application are used for a process of processing graphics data.

## Description

This application claims priority to Chinese Patent Application No. 202210744371.5, filed with the China National Intellectual Property Administration on June 28, 2022 and entitled "SHADER INPUT DATA PROCESSING METHOD AND GRAPHICS PROCESSING APPARATUS", which is incorporated herein by reference in its entirety.

### TECHNICAL FIELD

This application relates to the field of chip technologies, and in particular, to a shader input data processing method and a graphics processing apparatus.

### BACKGROUND

After a graphics processing unit (Graphics Processing Unit, GPU) is optimized and evolved for a long time, complexity and difficulty also continuously increase. As GPU requirements continuously increase, a requirement for performance, power, area (Performance, Power, Area, PPA) of the GPU is also increasingly high. One of most important units in the GPU is a computing unit, and the computing unit and memory (memory) access related to the computing unit occupy main power consumption of the GPU.

Currently, a computing unit in an architecture of a GPU is a general-purpose arithmetic logical unit (Arithmetic logical Unit, ALU) computing structure, and uses a single-instruction multiple-data (Single-Instruction Multiple-Data, SIMD) implementation, and a plurality of shaders (Shaders) and a plurality of warps in the GPU may share an ALU. In addition to warp initialization data, a large amount of data, for example, a texture (Texture), an image (Image), a uniform buffer object (uniform buffer object, UBO), and a tile buffer (Tile Buffer), is used in the operation. Usually, the data may be transferred from a memory outside the GPU to the ALU inside the GPU for computing in real time in a manner of downloading/sampling (loading/sampling), or the like. The data needs to be cached in a general-purpose register (General-Purpose Register, GPR) in the GPU, and then the ALU reads the data from the GPR for corresponding computing processing. However, this data processing manner brings a large amount of GPR access, causes high read/write power consumption of the GPR, and reduces PPA of the GPU.

### SUMMARY

Embodiments of this application provide a shader input data processing method and a graphics processing apparatus, so that in an image processing process, read/write power consumption of a GPR in a GPU can be reduced, a computing amount of an ALU can be reduced, and PPA of the GPU can be improved.

To achieve the foregoing objectives, the following technical solutions are used in embodiments of this application.

According to a first aspect, a graphics processing apparatus is provided. The graphics processing apparatus includes a shader, a memory management unit, and a coprocessor connected between the shader and the memory management unit; the shader is configured to send a read instruction to the memory management unit, where the read instruction includes an address of a to-be-read first operand and a first identifier, and the first identifier indicates to perform an operation on the first operand in the coprocessor; the memory management unit is configured to obtain the first operand from a first memory, and send the first operand to the coprocessor; and the coprocessor is configured to perform the operation on the first operand, to obtain an operation result.

The graphics processing apparatus may be a GPU. In this way, in a process of performing graphics processing by the GPU, a process in which an ALU needs to perform computing may be completed on a data return path outside the shader, that is, in the coprocessor, read data does not need to be stored in a GPR and then is read for computing, and the operation on the read first operand may be implemented on a data read back path, thereby reducing read/write of the GPR, reducing power consumption, and reducing workload of the ALU.

In a possible design, a first end of the shader is coupled to a first end of the memory management unit, a first end of the coprocessor is coupled to a second end of the shader, and a second end of the coprocessor is coupled to a second end of the memory management unit. In this way, when the memory management unit reads back the data, the coprocessor may complete data computing, and the ALU in the shader does not need to perform computing. This also reduces a quantity of times of read/write of the GPR.

In a possible design, the shader includes a scheduler and a second memory; and a first end of the scheduler is coupled to a first end of the second memory, a second end of the scheduler is coupled to the first end of the memory management unit, the second end of the memory management unit is coupled to the second end of the coprocessor, and the first end of the coprocessor is coupled to the first end of the second memory.

In a possible design, the scheduler is configured to send the read instruction to the memory management unit; the second memory is configured to receive the operation result obtained by the coprocessor; and the scheduler is further configured to: receive a first indication sent by the coprocessor, where the first indication indicates that the operation on the first operand is completed; and process the operation result based on the operation result and an indication of a program. In other words, after the coprocessor assists in completing computing, the computing result may be sent to the scheduler in the shader, so that the scheduler continues to perform other processing of the program based on the computing result.

In a possible design, the coprocessor includes a cache, a register, a selector, and a computing unit; a first end of the cache is coupled to a first end of the selector, a first end of the register is coupled to a second end of the selector, and a third end of the selector is coupled to a first end of the computing unit; a second end of the computing unit is coupled to the second end of the memory management unit; and a third end of the computing unit is coupled to the first end of the second memory.

In a possible design, the shader further includes an arithmetic logical unit, a first end of the arithmetic logical unit is coupled to a third end of the scheduler, and a second end of the arithmetic logical unit is coupled to a second end of the cache; the arithmetic logical unit is configured to receive an operation instruction sent by the scheduler, and obtain a second operand through computing according to the operation instruction; the cache is configured to store the second operand; and
the computing unit is configured to: receive the first operand from the memory management unit; receive, from the selector, the second operand from the cache or a third operand in the register, where the second operand is a preconfigured constant value; and obtain the operation result based on the first operand and the second operand, or obtain the operation result based on the first operand and the third operand.

In other words, in the coprocessor, an operand computed with the read first operand may be the second operand from the cache, or the third operand from the register. The second operand may be obtained by the ALU in the shader through computing and stored in the cache, and the third operand may be per draw uniform, and is a constant during computing. One draw may include a plurality of warps, and one warp may include a plurality of threads. Per warp uniform is actually per draw uniform. All threads in one draw can share same per draw uniform.

In a possible design, the computing unit is specifically configured to: obtain a first intermediate operation result after performing computing on the first operand and the second operand, or obtain a first intermediate operation result after performing computing on the first operand and the third operand; and add the first intermediate operation result as an addend to at least one other intermediate operation result, to obtain the operation result. For example, when an FMA operation is performed in a vertical reduction scenario, the first intermediate operation result may be added as an addend to at least one intermediate operation result of another operation, to obtain the operation result. In this way, in a process of performing graphics processing by the GPU, a process in which an ALU needs to perform computing may be completed in the coprocessor, read data does not need to be stored in a GPR and then is read for computing, and an FMA operation may be implemented on a data read back path, thereby reducing read/write of the GPR, reducing power consumption, and reducing workload of the ALU.

In a possible design, the computing unit includes: at least one multiplication unit and at least one addition unit, where a single multiplication unit in the at least one multiplication unit is configured to perform a multiply operation; a single addition unit in the at least one addition unit is configured to perform an add operation; and a combination of a part of multiplication units in the at least one multiplication unit and a part of addition units in the at least one addition unit is used for a floating-point multiply-add operation or a floating-point multiply-accumulate operation. Certainly, the computing unit is not limited to these computing manners, and may further include other computing manners.

According to a second aspect, a graphics processing method is provided. The graphics processing method is applied to a graphics processing apparatus. The graphics processing apparatus includes a shader, a memory management unit, and a coprocessor connected between the shader and the memory management unit. The method includes: controlling the shader to send a read instruction to the memory management unit, where the read instruction includes an address of a to-be-read first operand and a first identifier, and the first identifier indicates to perform an operation on the first operand in the coprocessor; controlling the memory management unit to obtain the first operand from a first memory, and send the first operand to the coprocessor; and controlling the coprocessor to perform the operation on the first operand, to obtain an operation result.

For beneficial effect of the second aspect, refer to the descriptions of the first aspect.

In a possible design, the coprocessor includes a cache, a register, and a computing unit, the cache stores a second operand, the register stores a third operand, the second operand is obtained by the shader through computing according to an operation instruction, and the third operand is a preconfigured constant value; and the controlling the coprocessor to perform the operation on the first operand, to obtain an operation result includes: controlling the coprocessor to receive the first operand from the memory management unit;
controlling the coprocessor to obtain the second operand in the cache or the third operand in the register; and controlling the coprocessor to obtain the operation result based on the first operand and the second operand, or obtain the operation result based on the first operand and the third operand.

In a possible design, the controlling the coprocessor to obtain the operation result based on the first operand and the second operand includes: obtaining a first intermediate operation result after performing computing on the first operand and the second operand, or obtaining a first intermediate operation result after performing computing on the first operand and the third operand; and adding the first intermediate operation result as an addend to at least one other intermediate operation result, to obtain the operation result.

In a possible design, the computing unit includes: at least one multiplication unit and at least one addition unit, where a single multiplication unit in the at least one multiplication unit is configured to perform a multiply operation; a single addition unit in the at least one addition unit is configured to perform an add operation; and a combination of a part of multiplication units in the at least one multiplication unit and a part of addition units in the at least one addition unit is used for a floating-point multiply-add operation or a floating-point multiply-accumulate operation.

According to a third aspect, a graphics processing apparatus is provided. The graphics processing apparatus includes at least one processor. The at least one processor is connected to a memory, and the at least one processor is configured to read and execute a program stored in the memory, so that the apparatus performs the method according to the second aspect or any one of the possible implementations of the second aspect.

According to a fourth aspect, a chip is provided. The chip is coupled to a memory, and is configured to read and execute program instructions stored in the memory, to implement the method according to the second aspect or any one of the possible implementations of the second aspect.

According to a fifth aspect, an embodiment of this application provides a graphics processing apparatus. The apparatus is included in an electronic device, and the apparatus has a function of implementing behavior of the electronic device according to any one of the foregoing aspects and any one of the possible implementations. The function may be implemented by hardware, or may be implemented by hardware executing corresponding software. The hardware or the software includes one or more modules or units corresponding to the foregoing function, for example, a shader, a memory management unit, and a coprocessor connected between the shader and the memory management unit.

According to a sixth aspect, an embodiment of this application provides a computer-readable storage medium. The computer-readable storage medium includes computer instructions. When the computer instructions are run on an electronic device, the electronic device is enabled to perform the antenna gain adjustment method according to the second aspect and any one of the possible implementations.

According to a seventh aspect, an embodiment of this application provides a computer program product. When the computer program product is run on a computer or a processor, the computer or the processor is enabled to perform the antenna gain adjustment method according to the second aspect and any one of the possible implementations.

It may be understood that the graphics processing apparatus, the chip, the computer-readable storage medium, the computer program product, or the like provided above may be applied to the corresponding method provided above. Therefore, for beneficial effect that can be achieved by the graphics processing apparatus, the chip, the computer-readable storage medium, the computer program product, or the like, refer to the beneficial effect in the corresponding method. Details are not described herein again.

These aspects or other aspects in this application are more concise and comprehensible in the following descriptions.

### BRIEF DESCRIPTION OF DRAWINGS

FIG. 1 is a diagram of an architecture of a GPU according to an embodiment of this application;
FIG. 2 is a diagram of an architecture of a GPU according to an embodiment of this application;
FIG. 3 is a diagram of an architecture of a graphics processing apparatus according to an embodiment of this application;
FIG. 4 is a diagram of an architecture of a graphics processing apparatus according to an embodiment of this application;
FIG. 5 is a diagram of an architecture of a graphics processing apparatus according to an embodiment of this application;
FIG. 6 is a diagram of a data computing path in a graphics processing apparatus according to an embodiment of this application;
FIG. 7 is a diagram of an architecture of a computing unit in a graphics processing apparatus according to an embodiment of this application;
FIG. 8 is a schematic flowchart of a shader input data processing method according to an embodiment of this application;
FIG. 9 is a schematic flowchart of a shader input data processing method according to an embodiment of this application;
FIG. 10 is a schematic flowchart of a shader input data processing method according to an embodiment of this application;
FIG. 11 is a schematic flowchart of a shader input data processing method according to an embodiment of this application;
FIG. 12 is a schematic flowchart of a shader input data processing method according to an embodiment of this application;
FIG. 13 is a diagram of a structure of a graphics processing apparatus according to an embodiment of this application; and
FIG. 14 is a diagram of a structure of a graphics processing apparatus according to an embodiment of this application.

### DESCRIPTION OF EMBODIMENTS

For ease of understanding, some concepts related to embodiments of this application are described for reference by using examples. Details are as follows:
GPU: The graphics processing unit is also referred to as a display core, a visual processor, or a display chip, and is a microprocessor dedicated to image computing on a personal computer, a workstation, a game console, and some mobile devices (for example, a tablet computer and a smartphone). A purpose of the GPU is to perform conversion and driving on display information that a computer system needs, and provide a row scanning signal for a display, to control the display to display correctly. The GPU is an important component of connecting the display and a personal computer mainboard, and is also one of important devices of "human-computer interaction".
ALU: The ALU is component in a computer that performs arithmetic and logical operations. Basic operations of the arithmetic unit include add, subtract, multiply, and divide operations, logical operations such as AND, OR, NOT, and XOR, and operations such as shift, comparison, and transfer. When the computer runs, the operations and operation types of the arithmetic unit are determined by a controller. Data processed by the arithmetic unit is from a memory, and processed result data is usually sent back to the memory or temporarily stored in the arithmetic unit.
SIMD: In this application, the SIMD may be understood as a technology in which one controller is used to control a plurality of pipelines to perform different computing in parallel, that is, perform a same operation on each (pipeline) of a group of pieces of data (the plurality of pipelines) at the same time, to implement space parallelism.
FMA (Floating-point Multiply-Add, FMA): The FMA can fuse an independent floating-point multiply operation and an add operation into one operation, can implement a floating-point multiply operation, and an add-subtract operation, and can also implement various fused multiply-add operations, for example, a multiply-add operation, a multiply-subtract operation, a negative multiply-add operation, and a negative multiply-subtract operation.

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

At present, fields such as an artificial intelligence (Artificial Intelligence, AI) technology, intelligent driving, cloud computing, and gaming are rapidly developing, and market requirements continuously increase. These fields have common characteristics, that is, a large amount of image processing and a large computing amount are required. A GPU system has a good advantage in graphics processing, so that a requirement for the GPU continuously increases in a current market.

As one of most important units in the GPU, a computing unit in the GPU and memory access related to the computing unit occupy main power consumption. Currently, a general-purpose computing unit in the GPU is an ALU computing structure, uses a SIMD implementation, and is shared by a plurality of shaders and a plurality of warps. Data to be computed includes warp initialization data, a texture, an image, a UBO, a tile buffer, and the like. In a large quantity of scenarios, a plurality of pieces of data are interpolated or filtered to obtain one piece of data.

When data is read, the data required for computing can be read from a memory outside the ALU in a manner of loading/sampling and cached in a GPR in the GPU. Then, the ALU reads the data from the GPR for computing. This manner brings a large amount of GPR access, causes high read/write power consumption, and reduces PPA of the GPU.

The following first briefly describes the GPU.

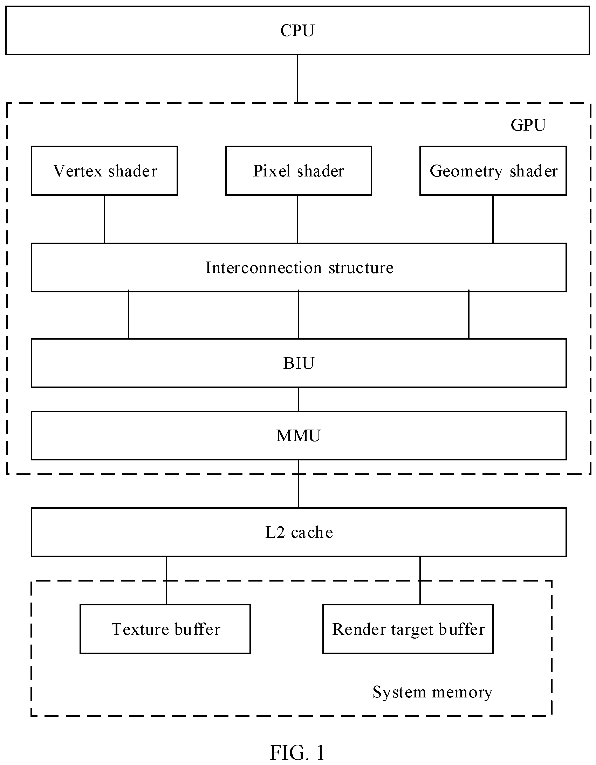

Refer to FIG. 1. An architecture of a GPU has evolved from a fixed function pipeline to a programmable shader processor architecture. Usually, a graphics driver is in a chip corresponding to a central processing unit (Central Processing Unit, CPU), the CPU may send a graphics processing task to the GPU, and a scheduler of the GPU parses the task. When the task is delivered to a shader through the scheduler, a graphics processing core (graphics processing core) unit in the shader executes the task. Usually, a quantity of graphics processing core units is 4, 8, 16, or the like, so that different shader program instructions can be executed in parallel.

In graphics, the GPU includes a plurality of types of shaders, for example, a vertex shader (vertex shader), a pixel shader (fragment shader), and a geometry shader (geometry shader). The plurality of types of shaders can share a plurality of graphics processing cores to execute different shader program instructions.

A program of the vertex shader includes instructions for performing an operation on one vertex instance. A program of the pixel shader includes instructions for processing one pixel, and usually includes: sampling a texture of the pixel from a texture sample buffer (texture sample buffer), and computing a reflected light source on the pixel to obtain a final shading result. A program of the geometry shader is configured to indicate internal division of the GPU to perform geometry processing.

The foregoing plurality of types of shaders can share the plurality of graphics processing cores, to execute different shader program instructions. It may be understood that although different types of shaders run different types of programs, in a hardware structure, a normalized architecture usually runs a normalized instruction set. The instruction set includes arithmetic, memory load/store, shift, and the like similar to those included in a general-purpose scalar processor. Each instruction at the foreground of each of these shaders is run on a plurality of data instances, and the shader has a usual single-instruction multiple-data SIMD structure. These shaders further need to communicate with the fixed function pipeline to complete a graphics function. The graphics function includes a rasterizer (rasterizer) and a texture mapper (texture mapper). The rasterizer is configured to compute pixels corresponding to each shading fragment. The texture mapper is configured to compute an address of a texel (texel) to be finally obtained after perspective transformation.

A rendering process is used as an example. When rendering a pixel, one pixel shader sends a texture sampling instruction to the texture mapper. The texture mapper sends a virtual address, of the texel, that is obtained through computing to a bus interface unit (Bus Interface Unit, BIU), and finds, through a memory management unit (Memory Management Unit, MMU) connected to the BIU, a physical address corresponding to the virtual address. For example, for a tile-based architecture used by the GPU, rendering is performed at a granularity of a tile (tile), and an intermediate result of rendering may be stored in a render target buffer (render target buffer) based on the physical address. In some instances, the system has an L2 cache. For a sampling process, in some instances, the system has the L2 cache (level 2 cache). If a currently sampled texel is not found in the L2 cache, a texel read operation reads content in a texture buffer (texture buffer) by using a bus operation.

The MMU manages a mapping relationship that is between a virtual address space and a physical address space and that is applied for by an application. In other words, the MMU stores a mapping relationship table for translating the virtual address into the physical address. Content of this table is managed by an operating system. For example, when receiving a load or sample instruction sent by a specific shader, the MMU may read data from the L2 cache or the system memory, for example, the foregoing warp initialization data, the texture, the image, the UBO, and the tile buffer. The read data may be cached in the GPR, and then the ALU reads the data from the GPR for performing the operation.

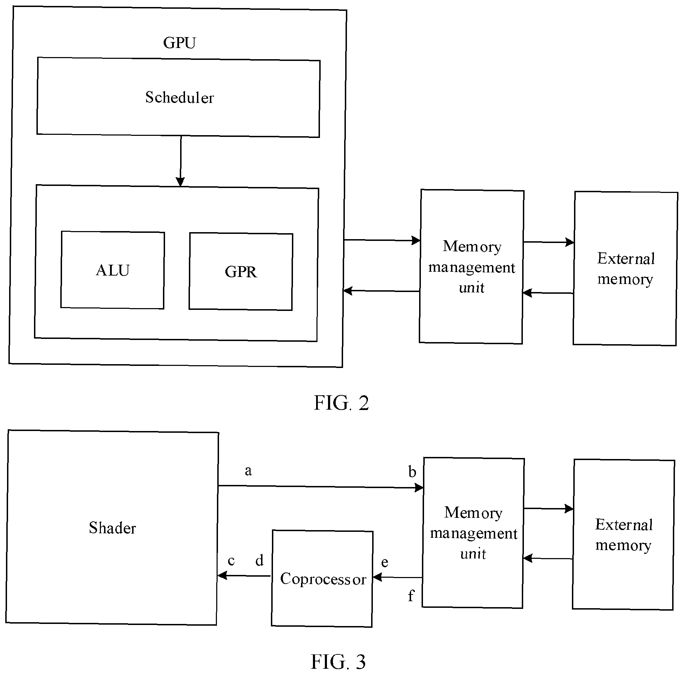

Refer to FIG. 2. A hardware architecture shared by a plurality of shaders may usually include a scheduler (scheduler), an ALU, a GPR, and the like. A process in which any shader performs computing by using warp load/sample data mainly includes the following four steps.
(1) The scheduler sends a related instruction such as load/sample to the memory management unit, where the instruction is for instructing the memory management unit to obtain data that needs to be computed from an external memory (external memory) or a double data rate (Double Data Rate, DDR) memory outside the shader, to transfer the data to the GPR inside the shader.
(2) When the external memory or the DDR memory returns the data to the shader, the shader can store the data in the GPR shared by the shader.
(3) The scheduler sends a computing instruction to the ALU, instructing the ALU to complete a computing operation. The ALU sends the data read from the GPR to perform the computing operation.
(4) The scheduler sends a related instruction such as a storage (store) instruction, to the ALU, instructing the ALU to store, in the external memory or the DDR memory by using the storage instruction or another instruction, a result obtained after computing.

It can be seen that, when the scheduler transfers a large amount of data from the external memory or the DDR memory to the GPR in real time at a warp granularity, the warp occupies a large quantity of shared GPR resources, and consequently warp parallelism is not high, and utilization of shared resources is not high.

In addition, because a storage space of the GPR is large, and read/write power consumption is high, the data transferred to the GPR is cached (buffered) on a path of the memory management unit, needs to be written into the shared GPR, and then is read from the GPR for computing, resulting in high power consumption of the entire system.

In addition, this process of transferring the data from the external memory or the DDR memory to the GPR for computing at the warp granularity occupies a large amount of computing power of the ALU. In comparison with the warp that does not need to transfer the data from the external memory or the DDR memory to the GPR for computing, the warp transfers the data from the external memory or the DDR memory to the GPR for computing or preempts computing power of the warp that does not need to transfer the data from the external memory or the DDR memory to the GPR for computing, and consequently the shader may become a computing performance bottleneck.

The warp is a basic unit for scheduling and running when the GPR executes the program. A plurality of threads can form one warp, and all threads in the warp execute a same instruction in parallel using different data resources. One warp occupies one streaming multiprocessor (streaming multiprocessor, SM) for running. The plurality of warps need to enter the SM in turn, and a scheduler of the SM is responsible for scheduling.

Therefore, this application provides a graphics processing apparatus and a processing method, the graphics processing apparatus and the processing method may be applied to a graphics data processing process performed by a GPU. The graphics processing apparatus and the processing method in this application are mainly directed to the following problems: In a current GPU, when a quantity of times of read/write of a GPR increases, overall power consumption of the GPU is large; when a warp granularity occupies a large amount of data, a large GPR space is occupied, and consequently parallelism of executing a shader is reduced; and when computing power of an ALU is shared, the shader becomes a computing performance bottleneck.

For these problems, in the graphics processing apparatus in this application, a computing unit, namely, an extension core (extension core), may be added to a path of a memory management unit, namely, a path used for load/sample. The extension core may execute an operation capability of the ALU, and reduce memory read/write related to the ALU, so that in addition to reducing power consumption of the GPU, computing power of the shared ALU is reduced. In addition, in this application, the extension core is added to the path of load/sample, so that an amount of data written back to the GPR can be reduced, and in addition to reducing the power consumption of the GPU, a requirement for the GPR is reduced.

The graphics processing apparatus and the processing method provided in this application may be applied to the GPU. For an internal structure of the GPU, refer to the structure of the GPU shown in FIG. 1. It should be understood that the structure of the GPU shown in FIG. 1 is merely an example, and may alternatively be another structure. This is not limited in this application.

The following describes the graphics processing apparatus provided in this application.

Refer to FIG. 3. This application provides a graphics processing apparatus. The graphics processing apparatus includes a shader, a memory management unit, and a coprocessor connected between the shader and the memory management unit.

The shader is configured to send a read instruction to the memory management unit, where the read instruction includes an address of a to-be-read first operand and a first identifier, and the first identifier indicates to perform an operation on the first operand in the coprocessor.

The memory management unit is configured to obtain the first operand from a first memory, and send the first operand to the coprocessor.

The coprocessor is configured to perform the operation on the first operand, to obtain an operation result.

A first end a of the shader is coupled to a first end b of the memory management unit, a second end c of the shader is coupled to a first end d of the coprocessor, and a second end e of the coprocessor is coupled to a second end f of the memory management unit.

The foregoing graphics processing apparatus may be understood as the GPU; the shader may be understood as the shader; the memory management unit is understood as the foregoing MMU, namely, the path of load/sample; and the coprocessor may be understood as the extension core. The first memory may be an external memory other than the shader in this application. The external memory may be an external memory other than the shader inside the GPU, or may be a DDR memory outside the GPU, or the like.

That is, in this application, based on a conventional ALU computing architecture, one computing unit, namely, the coprocessor, is added to a data path (data path) returned by the external memory, the DDR memory, or the like.

If the shader adds the first identifier to an instruction for reading data, it is equivalent to instructing the memory management unit to perform computing on the read-back data in the extension core. In this way, in comparison with a manner in which the data is first read back to a GPR, and then an ALU reads the data from the GPR for computing, in this application, data computing can be implemented on the data path, and read/write of the GPR can be reduced, so that in addition to reducing power consumption of the GPU, computing power of the ALU can be reduced, that is, workload (workload) of the ALU can be reduced. In addition, a requirement for the GPR is reduced, and warp parallelism is improved.

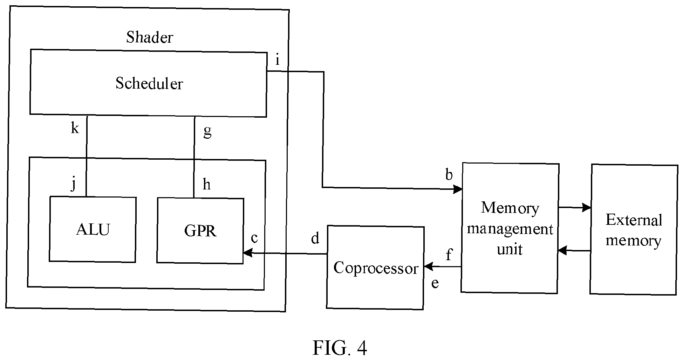

In some embodiments, if the architecture of the graphics processing apparatus shown in FIG. 3 is combined with the structure of the shader in FIG. 2, the graphics processing apparatus shown in FIG. 3 may also be shown in FIG. 4.

The shader includes a scheduler, an ALU, and a second memory. The second memory may be the GPR in this application.

A first end g of the scheduler is coupled to a first end h of the second memory, a second end i of the scheduler is coupled to the first end b of the memory management unit, the first end d of the coprocessor is coupled to a first end c of the second memory, the second end e of the coprocessor is coupled to the second end f of the memory management unit, and a first end j of the ALU is coupled to a third end k of the scheduler.

In the architecture in FIG. 4, the scheduler is configured to send the read instruction to the memory management unit;
the second memory is configured to receive the operation result obtained by the coprocessor; and
the scheduler is further configured to: receive a first indication sent by the coprocessor, where the first indication indicates that the operation on the first operand is completed; and
process the operation result based on the operation result and an indication of a program.

In other words, when the scheduler in the shader sends the read instruction, the data read back by the memory management unit from the external memory may be returned to the extension core for computing, and the computing result may be returned to the GPR for storage. When receiving the first indication from the extension core, the scheduler determines that the operation on the first operand read back from the external memory is completed. The scheduler may schedule the computing result from the GPR to continue program-related computing.

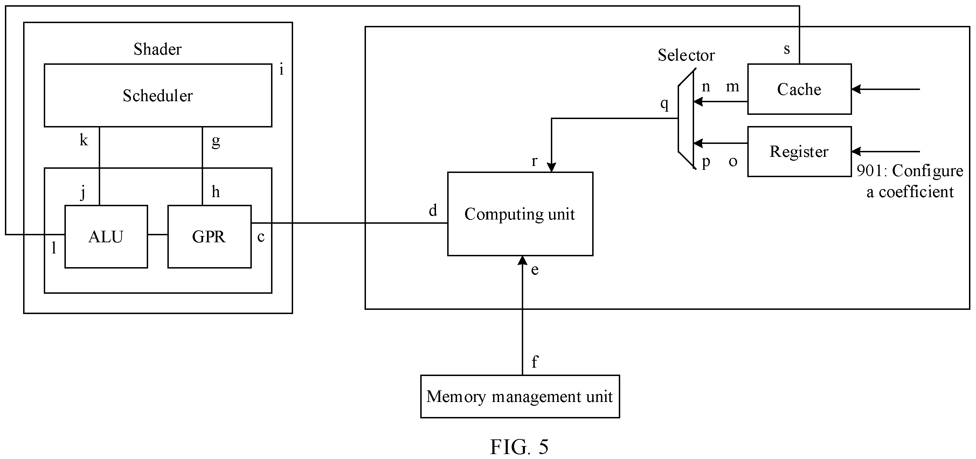

In some embodiments, as shown FIG. 5, the coprocessor includes a cache, a register, a selector, and a computing unit. A second end 1 of the ALU is coupled to a second end s of the cache.

A first end m of the cache is coupled to a first end n of the selector, a first end o of the register is coupled to a second end p of the selector, and a third end q of the selector is coupled to a first end r of the computing unit;
a second end e of the computing unit is coupled to the second end f of the memory management unit; and
a third end d of the computing unit is coupled to the first end c of the second memory.

In some embodiments, the computing unit in the coprocessor may compute the read-back first operand and a read-back second operand/third operand, where the second operand may be from the cache, the third operand may be from the register, the second operand in the cache may be data obtained by the ALU in the shader after computing, and the third operand in the register may be a preconfigured constant value.

Therefore, the architecture of the GPU shown in FIG. 5 is applied, and an arithmetic logical unit is configured to receive an operation instruction sent by the scheduler, and obtain the second operand through computing according to the operation instruction;
the cache is configured to store the second operand; and
the computing unit is configured to:
   receive the first operand from the memory management unit;
   receive, from the selector, the second operand from the cache or the third operand in the register; and
   obtain the operation result based on the first operand and the second operand, or obtain the operation result based on the first operand and the third operand.

For example, the register may be DESC (descriptor), and the preconfigured constant value may be per draw uniform. The per draw uniform may be understood as an operand that is shared by a plurality of threads in one warp and that is used for computing. Usually, each thread in one warp obtains a different first operand from the external memory, and obtains a same third operand per draw uniform from the register.

The computing unit may perform a computing operation such as a floating-point multiply-add (Floating-point Multiply-Add, FMA) (multiply-accumulate (MAD)) operation or a dot product (DOT) operation.

In some embodiments, in this application, a scenario in which the data is read from the external memory outside the shader through the memory management unit to the ALU for computing, for example, may be applied to a benchmark or game scenario.

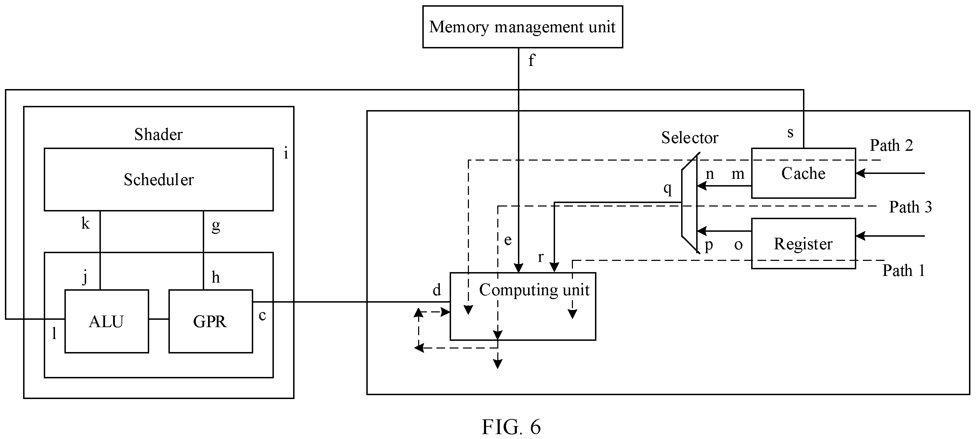

For example, in these scenarios, computing performed in the extension core in the coprocessor may be at least one of the following four computing operations, but is not limited to the four computing operations:
(1) A MUL/ADD operation may also be referred to as a multiply/add operation. In the computing unit, a path of data source for computing is the external memory, namely, the first operand. Another path of data source is per draw uniform in the register, namely, the third operand, and a result obtained by the computing unit after computing may be stored in the GPR after being output. A data path of the third operand in the extension core may be a path 1 in FIG. 6.
(2) A MUL/ADD operation may also be referred to as a multiply/add operation. In the computing unit, a path of data source for computing is the external memory, namely, the first operand. Another path of data source is data that is obtained by the ALU after computing and that is stored in the cache, namely, the second operand, and a result obtained by the computing unit after computing may be stored in the GPR after being output. A data path of the second operand in the extension core may be a path 2 in FIG. 6.
(3) A MAD operation may also be referred to as a multiply-add operation. In the computing unit, a path of data source for computing is the external memory, namely, the first operand. Another path of data source is the second operand that is obtained by the ALU after computing and that is stored in the cache or the third operand per draw uniform that is stored in the register. The computing unit may compute the first operand and the second operand/the third operand, and the computing result is used as a next source operand (Source), is denoted as SRC2, and is added to a result obtained by computing a next read operand and the second operand/the third operand. In this way, the multiply-add operation is performed cyclically, and a finally obtained computing result may be stored in the GPR. A data computing path may be a path 3 in FIG. 6.
(4) A DOT operation may also be referred to as a multiply-accumulate operation. In the computing unit, a path of data source for computing is the external memory, namely, the first operand. Another path of data source is the second operand that is obtained by the ALU after computing and that is stored in the cache or the third operand per draw uniform that is stored in the register. The computing result obtained by the computing unit by performing computing on the first operand and the second operand/the third operand may be a computing result of a single thread. When computing results of a plurality of threads in one warp are obtained, the computing unit adds the computing results of the plurality of threads, and a finally obtained computing result may be stored in the GPR. A data computing path may also be a path 3 in FIG. 6.

In this way, it may be understood that a product form of this application may be improvement and optimization of an architecture of the ALU of the shader in the GPU, which is equivalent to adding the extension core to the GPU as a coprocessor of an original ALU. In addition, the register and the cache are configured in the extension core, so that workload of the ALU can be reduced. In addition, a quantity of times of read/write of the GPR is reduced, thereby improving overall performance and power consumption.

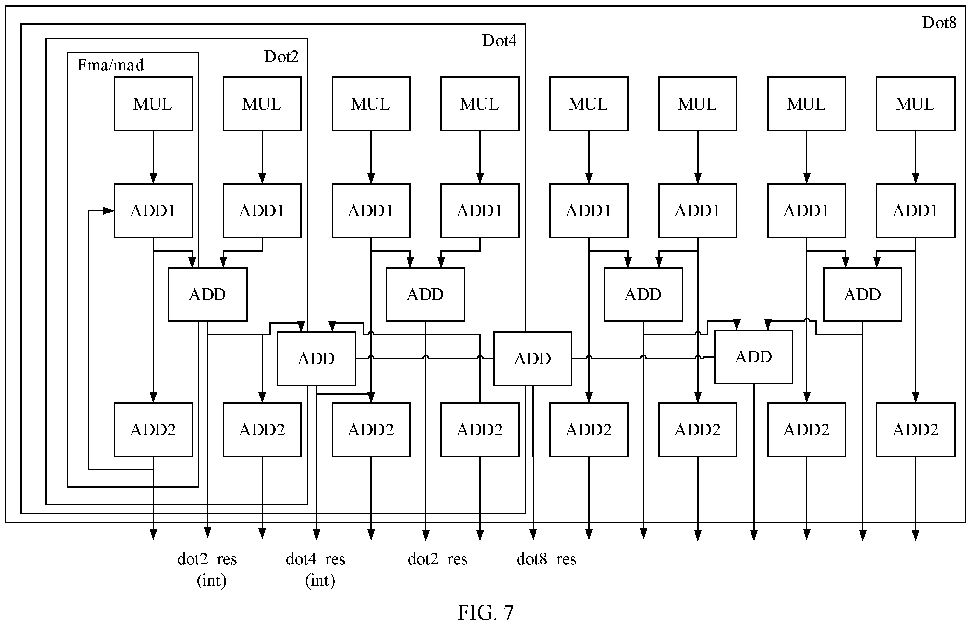

In some embodiments, a basic block diagram inside the computing unit of the extension core may be shown in FIG. 7. It should be understood that the computing unit shown in FIG. 7 is merely an example, and may alternatively be a computing unit of another structure. This is not limited in this application.

It can be learned that the computing unit in FIG. 7 is mainly configured to implement basic function algorithms such as a multiplication unit MUL, an addition unit ADD, and a floating-point multiply-add operation FMA. Whether to support the multiply-accumulate operation such as a function algorithm, for example, DOT2, DOT4, and DOT8, can be determined based on the scenario.

Therefore, the computing unit in this application may include:
at least one MUL and at least one ADD, where
a single MUL in the at least one MUL is configured to perform a multiply operation;
a single MUL in the at least one MUL is configured to perform a multiply operation;
a single ADD in the at least one ADD is configured to perform an add operation; and
a combination of a part of MULs in the at least one MUL and a part of ADDs in the at least one ADD is used for FMA or DOT.

For example, a multiply-add function (an FMA operation unit) can be implemented by reusing a basic MUL operation unit and an ADD operation unit;
a DOT2 function can be implemented by reusing two FMA operation units;
a DOT4 function can be implemented by reusing two operation units in DOT2; and
a DOT8 function can be implemented by reusing two operation units in DOT4.

The structure of the GPU provided in this application is applied, and the following uses an example to describe the graphics processing method in this application.

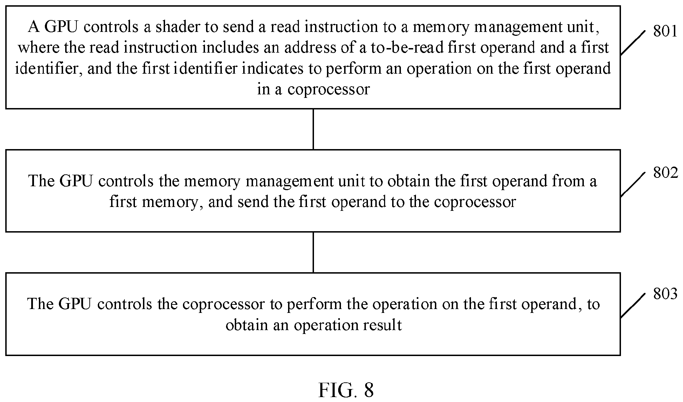

This application provides a shader input data processing method. As shown in FIG. 8, the method includes the following steps.

801: A GPU controls a shader to send a read instruction to a memory management unit, where the read instruction includes an address of a to-be-read first operand and a first identifier, and the first identifier indicates to perform an operation on the first operand in a coprocessor.

802: The GPU controls the memory management unit to obtain the first operand from a first memory, and send the first operand to the coprocessor.

803: The GPU controls the coprocessor to perform the operation on the first operand, to obtain an operation result.

That the coprocessor performs the operation on the first operand may be performing an operation on the first operand and a second operand in a cache, or may be performing an operation on the first operand and a third operand in a register DESC.

In this way, in a process of performing graphics processing by the GPU, a process in which an ALU needs to perform computing may be completed on a data return path outside the shader, that is, in the coprocessor, read data does not need to be stored in a GPR and then is read for computing, and the operation on the read first operand may be implemented on a data read back path, thereby reducing read/write of the GPR, reducing power consumption, and reducing workload of the ALU.

Based on the graphics processing method shown in FIG. 8, the following uses different computing scenarios as examples for description.

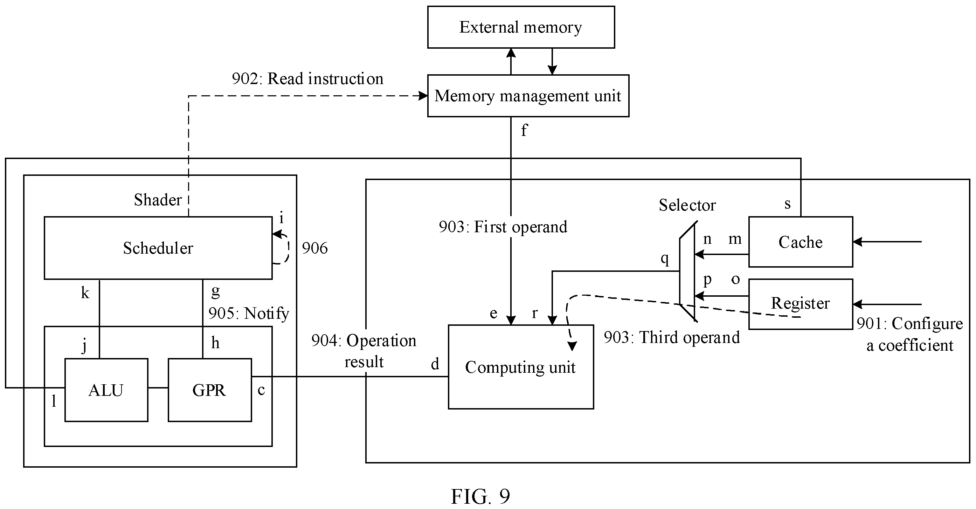

This application provides a shader input data processing method. As shown in FIG. 9, the method is applicable to a scenario in which a computing unit is configured to compute a first operand read from an external memory and a third operand read from a register DESC. The scenario is featured in performing a MUL/ADD operation. The method includes the following steps.

901: A system configures a coefficient of each rendering thread (per draw) in the register.

A secondary system in which a GPU is located may configure, by using software, the coefficient of each rendering thread, namely, per draw uniform, and store the coefficient in the DESC.

A warp may be understood as a smaller granularity of a draw. One draw may include a plurality of warps, and one warp may include a plurality of threads. Per warp uniform is actually per draw uniform. All threads in one draw can share same per draw uniform.

902: A scheduler sends a read instruction to a memory management unit, where the read instruction includes an address of a to-be-read first operand and a first identifier, and the first identifier indicates to perform an operation on the first operand in a coprocessor.

The read instruction may be, for example, a load instruction or a sample instruction. The first identifier indicates that the operation needs to be performed, in an extension core, on the first operand read by using the read instruction.

903: After obtaining the first operand from a first memory, the memory management unit synchronously obtains the third operand in the register.

That is, after obtaining the first operand from the external memory, the memory management unit sends the first operand to the extension core, and the computing unit obtains the first operand. In addition, the extension core is notified to obtain the third operand per draw uniform from the DESC, and the third operand is read to the computing unit.

When the third operand is read from the DESC, the third operand may be read from the DESC based on an ID of a currently running warp or another label.

904: The computing unit performs an operation on the first operand and the third operand, to obtain an operation result, and sends the operation result to a GPR.

For example, the MUL or ADD operation may be performed on the first operand and the third operand, to obtain the operation result. The computing unit may write the operation result into the GPR in a shader.

905: After storing the operation result, the GPR notifies the scheduler that computing ends.

906: The scheduler continues to perform processing on the operation result according to an indication of a current program (for example, the warp).

In this way, in a process of performing graphics processing by the GPU, a process in which an ALU needs to perform computing may be completed in the coprocessor, read data does not need to be stored in the GPR and then is read for computing, and a MUL or ADD computing operation may be implemented on a data read back path, thereby reducing read/write of the GPR, reducing power consumption, and reducing workload of the ALU.

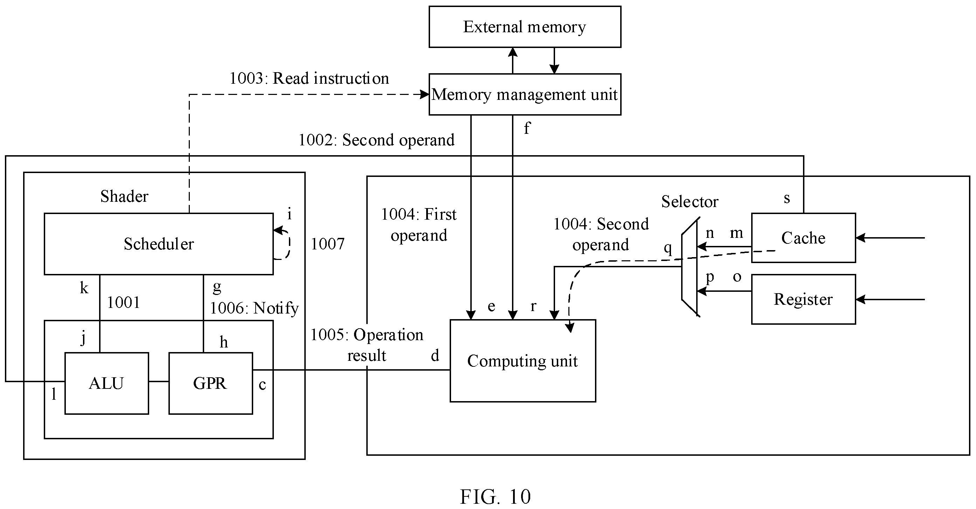

This application provides a shader input data processing method. As shown in FIG. 10, the method is applicable to an EMIT scenario. The scenario is featured in a MUL/ADD operation. A computing unit is configured to compute a first operand read from an external memory and a second operand read from a cache. The method includes the following steps.

1001: A scheduler schedules an operation instruction, and sends the operation instruction to an ALU, to indicate the ALU to obtain a second operand through computing.

1002: When obtaining the second operand through computing, the ALU sends the second operand to a coprocessor, and the coprocessor may store the second operand in the cache in the coprocessor.

1003: The scheduler sends a read instruction to a memory management unit, where the read instruction includes an address of a to-be-read first operand and a first identifier, and the first identifier indicates to perform an operation on the first operand in the coprocessor.

For step 1003, refer to specific implementation in step 902.

1004: After obtaining the first operand from a first memory, the memory management unit synchronously obtains the second operand in the cache.

That is, after obtaining the first operand from the external memory, the memory management unit sends the first operand to an extension core, and the computing unit obtains the first operand. In addition, the extension core is notified to obtain the second operand from the cache, and the second operand is read to the computing unit. The second operand herein is obtained by the ALU through computing in 1001.

1005: The computing unit performs an operation on the first operand and the second operand, to obtain an operation result.

For example, the MUL or ADD operation may be performed on the first operand and the second operand, to obtain the operation result. The computing unit may write the operation result into a GPR in a shader.

1006: After storing the operation result, the GPR notifies the scheduler that computing ends.

1007: The scheduler continues to perform processing on the operation result according to an indication of a current program (for example, a warp).

In this way, in a process of performing graphics processing by a GPU, a process in which the ALU needs to perform computing may be completed in the coprocessor, read data does not need to be stored in the GPR and then is read for computing, and the MUL or ADD computing operation may be implemented on a data read back path, thereby reducing read/write of the GPR, reducing power consumption, and reducing workload of the ALU.

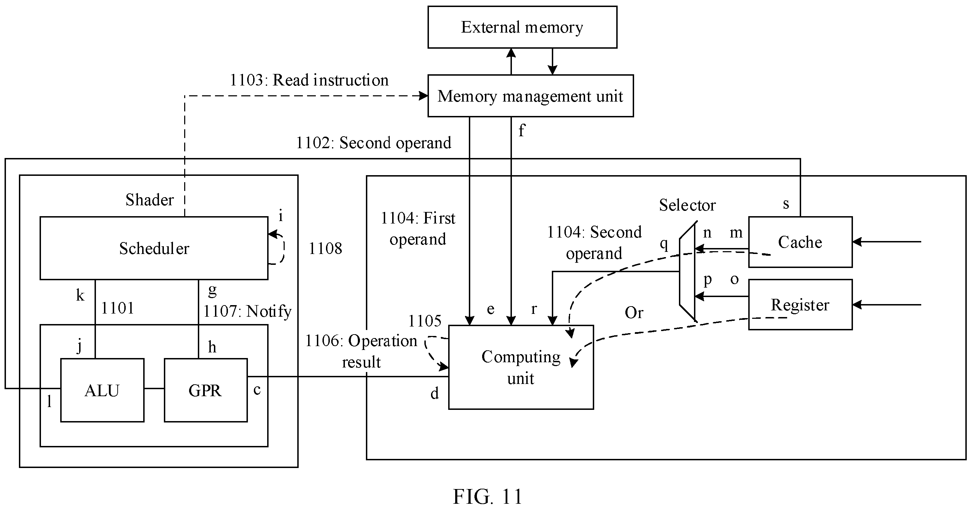

This application provides a shader input data processing method. As shown in FIG. 11, the method is applicable to a vertical reduction scenario, that is, vertical computing may be performed in a coprocessor, to reduce a computing amount of an ALU. This scenario is featured in an FMA operation. An operation result of a previous time of FMA may be used as SRC2 (an addend) of a next time of FMA. The method includes the following steps.

1101: A scheduler schedules an operation instruction, and sends the operation instruction to the ALU, to indicate the ALU to obtain a second operand through computing.

1102: When obtaining the second operand through computing, the ALU sends the second operand to the coprocessor, and the coprocessor may store the second operand in a cache in the coprocessor.

Step 1101 and step 1102 may also be replaced with that a GPU configures a third operand per draw uniform in a register.

1103: The scheduler sends a read instruction to a memory management unit, where the read instruction includes an address of a to-be-read first operand and a first identifier, and the first identifier indicates to perform an operation on a first operand in the coprocessor.

1104: After obtaining the first operand from a first memory, the memory management unit synchronously obtains the second operand in the cache.

Step 1104 may also be replaced with that the memory management unit synchronously obtains a third operand in the register after obtaining the first operand from the first memory.

1105: The computing unit performs an operation on the first operand and the second operand, to obtain a first intermediate operation result, and transmits the first intermediate operation result to a next FMA operation as an addend.

The first intermediate operation result is transmitted to a source 2 of the next FMA operation, and is used as the addend to continue to perform the next FMA operation.

Step 1105 may also be replaced with that the computing unit performs an operation on the first operand and the third operand, to obtain the first intermediate operation result.

1106: The computing unit cyclically performs step 1105 to obtain a final operation result of a current operation instruction, and sends the operation result to a GPR.

In other words, the first intermediate operation result is added as the addend to at least one intermediate operation result of another operation, to obtain the operation result.

The at least one intermediate operation result of the another operation may be understood as that a new first operand is obtained from an external memory, and/or a new second operand is obtained from the cache. MUL computing in the next FMA operation is performed on the new first operand and the new second operand, to obtain a product, the product is a second intermediate operation result, the second intermediate operation result and the first intermediate operation result are added (ADD in the FMA operation), and the obtained operation result may further continue to be used as an addend of a next operation of the FMA operation.

1107: After storing the final operation result, the GPR notifies the scheduler that computing ends.

1108: The scheduler continues to perform processing on the operation result according to an indication of a current program (for example, a warp).

In this way, in a process of performing graphics processing by the GPU, a process in which an ALU needs to perform computing may be completed in the coprocessor, read data does not need to be stored in a GPR and then is read for computing, and an FMA operation may be implemented on a data read back path, thereby reducing read/write of the GPR, reducing power consumption, and reducing workload of the ALU.

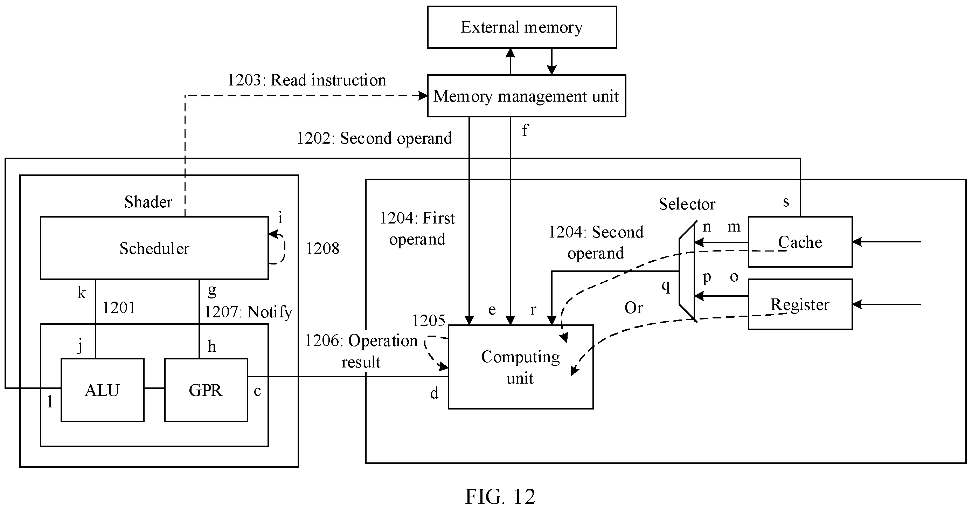

This application provides a shader input data processing method. As shown in FIG. 12, the method is applicable to a horizontal reduction scenario, that is, horizontal computing may be performed in a coprocessor, to reduce a computing amount of an ALU. This scenario is featured in a DOT operation, and data between different threads is added. The method includes the following steps.

1201: A scheduler schedules an operation instruction, and sends the operation instruction to the ALU, to indicate the ALU to obtain a second operand through computing.

1202: When obtaining the second operand through computing, the ALU sends the second operand to the coprocessor, and the coprocessor may store the second operand in a cache in the coprocessor.

Step 1201 and step 1202 may also be replaced with that a GPU configures a third operand per draw uniform in a register.

1203: The scheduler sends a read instruction to a memory management unit, where the read instruction includes an address of a to-be-read first operand and a first identifier, and the first identifier indicates to perform an operation on a first operand in the coprocessor.

1204: After obtaining the first operand from a first memory, the memory management unit synchronously obtains the second operand in the cache.

Step 1204 may also be replaced with that the memory management unit synchronously obtains a third operand in the register after obtaining the first operand from the first memory.

1205: The computing unit performs an operation on the first operand and the second operand, to obtain a first intermediate operation result, adds the first intermediate operation result as an addend to a second intermediate operation result obtained after another thread performs steps 1201 to 1205, to obtain a final operation result.

It may be understood that the computing unit performs an FMA operation on the first operand and the second operand in the current thread, to obtain the first intermediate operation result.

The first intermediate operation result is added as the addend to at least one intermediate operation result of another thread, to obtain a final operation result. The final operation result may be an operation result at one warp granularity.

Step 1205 may also be replaced with that the computing unit performs an operation on the first operand and the third operand, to obtain a first intermediate operation result, adds the first intermediate operation result as an addend to a second intermediate operation result obtained after another thread performs steps 1201 to 1205, to obtain a final operation result.

1206: The computing unit sends the final operation result to a GPR.

1207: After storing the operation result, the GPR notifies the scheduler that computing ends.

1208: The scheduler continues to perform processing on the operation result according to an indication of a current program (for example, a warp).

In this way, in a process of performing graphics processing by the GPU, a process in which an ALU needs to perform computing may be completed in the coprocessor, read data does not need to be stored in a GPR and then is read for computing, and a DOT operation may be implemented on a data read back path, thereby reducing read/write of the GPR, reducing power consumption, and reducing workload of the ALU.

The following uses the vertical reduction scenario shown in FIG. 11 as an example, and uses a key benchmark M31 key frame in the GPU as an object and the shader shown in a high language as an example for analysis and comparison. 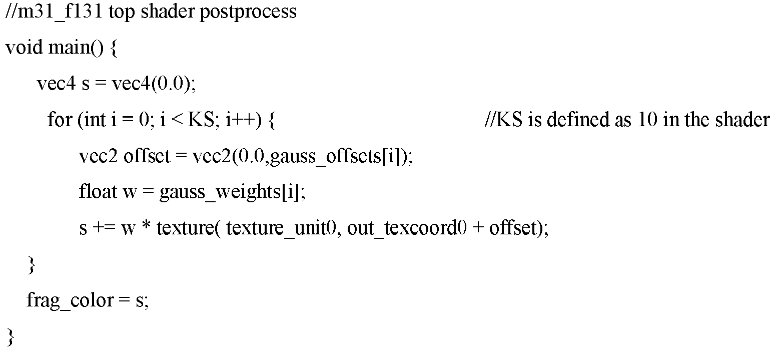 gauss_offsets may be understood as the address of the first operand, gauss_weights may be understood as the third operand per draw uniform, and the texture may be understood as the read instruction (the load/sample instruction). The read first operand may be multiplied by w (gauss_weights), and then accumulation is performed, to implement an FMA operation.

If the graphics processing apparatus and the graphics processing method provided in this application are not used, in a process of M31, the scheduler needs to send 10 read instructions, write data obtained by using the 10 read instructions into the GPR, then sequentially read the GPR based on a data sequence to perform a MUL operation in the FMA, and then perform an ADD operation in the FMA on MUL operation results respectively corresponding to the 10 read instructions, to obtain the final operation result.

If the graphics processing apparatus and the graphics processing method provided in this application are used, in a process of M31, the scheduler needs to send only one read instruction, and then performs 10 times of computing on the read data in the extension core. That is, a 1^{st} piece of data in 10 pieces of data is read as the first operand, a MUL operation in the FMA is performed with the third operand per draw uniform, and an operation result is used as an addend and forwarded to the ADD operation in the FMA, to obtain the first intermediate operation result. A 2^{nd} piece of data in the 10 pieces of data is read and then used as a new first operand and the third operand per draw uniform to perform the MUL operation in the FMA, to obtain the second intermediate operation result, the second intermediate operation result is used as an addend and forwarded to the ADD operation in the FMA, and the ADD operation is performed on the first intermediate operation result and the second intermediate operation result. In this way, the 10 times of computing can be cyclically performed in the extension core, to obtain the final operation result.

For another example, in a conventional computing structure, an assembly instruction of the shader may be as follows:
sample.2d.wal.rmode3 h0.xyzw,0,binded,0.binded //h0~h39
+move.w1.subw0.rte.b2 temp.u32,r0,u32.inc
+emit.eos o0,temp
//c0~c39-> afsharp descriptor
fmul.w1.subw0.b4 trh0_c.f16,ch80,h0.inc
fma.b4 trh0.f16,ch82,h4.inc,trh0.inc
fma.b4 trh0.f16,ch84,h8.inc,trh0.inc
fma.b4 trh0.f16,ch86,h12.inc,trh0.inc
fma.b4 trh0.f16,ch88,h16.inc,trh0.inc
fma.b4 trh0.f16,ch90,h20.inc,trh0.inc
fma.b4 trh0.f16,ch92,h24.inc,trh0.inc
fma.b4 trh0.f16,ch94,h28.inc,trh0.inc
fma.b4 h0.f16,ch96,h32.inc,trh0_c.inc
fma.b4 temp.f16,ch98,h36.inc,h0.inc
+ emit.eos o0,temp.f16
nop.b1
+nop
+end

It can be seen from the assembly instruction that, first, data that needs to be interpolated is load to the internal GPR by using the sample instruction, and a total of 40+4 write operations and four read operations are required. Then, a corresponding reduction operation is performed by using the FMA instruction, and a total of 44 read operations and four write operations are required. Finally, emit processing is performed. Therefore, the shader occupies 40 memory spaces, and a total of 48 write operations and 48 read operations are performed on the GPR.

In contrast, if an architecture in which the extension core is added is used in this application, in the architecture of the extension core, the assembly instruction obtained through mapping may be as follows:
sample.2d.wsl. extension.rmode3 h0.xyzw,0,binded,0.binded
+move.w1.subw0.rte.b2 temp.u32,r0,u32.inc
+emit.eos o0,temp
move.b4 temp.f16,h0.inc
+emir.end o0,temp.f16
nop.b1
+nop
+end

It can be seen from the assembly instruction that the reduction operation is directly indicated to be performed in the extension core by using the sample instruction. That is, data is directly computed in the extension core. The shader occupies four memory spaces (four memory addresses: xyzw), and a total of 8 write operations and 8 read operations are performed on the GPR.

In other words, the write operation and the read operation in this application are greatly reduced, a quantity of times of read/write of the GPR is reduced, and in addition to reducing power consumption, a computing amount of the shared ALU can be reduced.

In addition, in some instances, resource comparison is performed between a conventional computing architecture and a computing architecture in this application, as shown in Table 1.

**Table 1**

| | Conventional computing architecture | Computing architecture in the present invention | Optimization ratio |
|---|---|---|---|
| GPR occupation | 40 | 4 | 90.0% |
| Quantity of times of read operations of the GPR | 48 | 8 | 83.3% |
| Quantity of times of write operations of the GPR | 48 | 8 | 83.3% |

It can be learned from the foregoing analysis that, in the computing architecture of this application, a quantity of times of read/write of the GPR is reduced by 83%, and an occupation status of a GPR space is reduced by 90%. That is, power consumption of the GPR is greatly reduced by about 83%. On the other hand, the space occupied by the GPR is greatly reduced, which facilitates parallel processing of a plurality of warp tasks. In addition, in the architecture of the GPU in this application, the assembly instruction of the shader is also simplified, and a computing amount of a plurality of shared ALUs is reduced.

It may be understood that, to implement the foregoing functions, the graphics processing apparatus includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, division into modules in embodiments is an example, and is merely logical function division. During actual implementation, another division manner may be used.

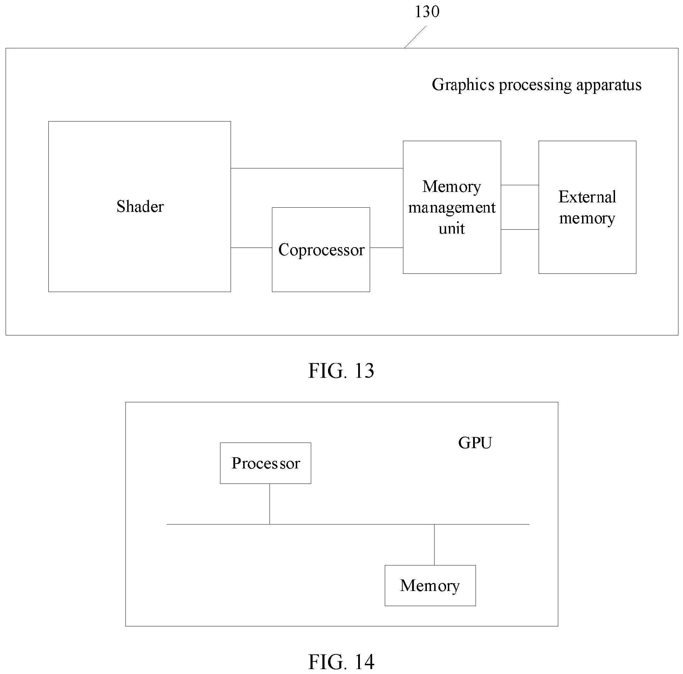

When each functional module is obtained through division based on each corresponding function, FIG. 13 is a possible composition diagram of a graphics processing apparatus 130 in the foregoing embodiment. As shown in FIG. 13, the graphics processing apparatus 130 may include the shader, the coprocessor, the memory management unit, and the extenial memory shown in FIG. 3. The shader may include a scheduler, an ALU, and a GPR.

The shader may be configured to support the graphics processing apparatus 130 in performing step 1203, step 902, step 1001, step 1002, step 1003, step 1101, step 1102, step 1103, and the like, and/or used in another process of the technology described in this specification.

The memory management unit may be configured to support the graphics processing apparatus 130 in performing step 1204, step 903, step 1004, step 1104, and the like, and/or used in another process of the technology described in this specification.

The coprocessor may be configured to support the graphics processing apparatus 130 in performing step 1205, step 1206, step 904, step 1005, step 1105, step 1106, and the like, and/or used in another process of the technology described in this specification.

The shader may be configured to support the graphics processing apparatus 130 in performing step 1207, step 1208, step 905, step 906, step 1006, step 1007, step 1107, step 1108, and the like, and/or used in another process of the technology described in this specification.

It should be noted that all related content of the steps in the foregoing method embodiments may be cited in function descriptions of the corresponding functional modules. Details are not described herein again.

The graphics processing apparatus 130 provided in this embodiment is configured to perform the foregoing shader input data processing method, and therefore can achieve same effect as the foregoing implementation method.

When an integrated unit is used, the graphics processing apparatus 130 may include a processing module, a storage module, and a communication module. The processing module may be configured to control and manage an action of the graphics processing apparatus 130, for example, may be configured to support the graphics processing apparatus 130 in performing the steps performed by the shader, the coprocessor, and the memory management unit. The storage module may be configured to support the graphics processing apparatus 130 in storing program code, data, and the like. The communication module may be configured to support the graphics processing apparatus 130 in communicating with another device, for example, communicating with another wireless connection device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the graphics processing apparatus 130 in this embodiment may be a GPU having a structure shown in FIG. 14.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the shader input data processing method in the foregoing embodiments.

An embodiment of this application further provides a computer storage medium. The computer storage medium stores computer instructions. When the computer instructions are run on an electronic device, the electronic device is enabled to perform the foregoing related method steps to implement the shader input data processing method in the foregoing embodiments.

An embodiment of this application further provides a computer program product. When the computer program product is run on a computer, the computer is enabled to perform the foregoing related steps to implement the shader input data processing method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the antenna gain adjustment method performed by the electronic device in the foregoing method embodiments.

The electronic device, the computer storage medium, the computer program product, or the chip provided in embodiments is configured to perform the corresponding method provided above. Therefore, for beneficial effect that can be achieved, refer to beneficial effect of the corresponding method provided above. Details are not described herein again.

A person skilled in the art may learn from the descriptions of the foregoing implementations that, for a purpose of convenient and brief description, division into the foregoing functional modules is merely used as an example for description. During actual application, the foregoing functions may be allocated to different functional modules for implementation based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing content is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A graphics processing apparatus, wherein the graphics processing apparatus comprises a shader, a memory management unit, and a coprocessor connected between the shader and the memory management unit;
the shader is configured to send a read instruction to the memory management unit, wherein the read instruction comprises an address of a to-be-read first operand and a first identifier, and the first identifier indicates to perform an operation on the first operand in the coprocessor;
the memory management unit is configured to obtain the first operand from a first memory, and send the first operand to the coprocessor; and
the coprocessor is configured to perform the operation on the first operand, to obtain an operation result.

2. The graphics processing apparatus according to claim 1, wherein a first end of the shader is coupled to a first end of the memory management unit, a first end of the coprocessor is coupled to a second end of the shader, and a second end of the coprocessor is coupled to a second end of the memory management unit.

3. The graphics processing apparatus according to claim 1 or 2, wherein the shader comprises a scheduler and a second memory; and
a first end of the scheduler is coupled to a first end of the second memory, a second end of the scheduler is coupled to the first end of the memory management unit, the second end of the memory management unit is coupled to the second end of the coprocessor, and the first end of the coprocessor is coupled to the first end of the second memory.

4. The graphics processing apparatus according to claim 3, wherein
the scheduler is configured to send the read instruction to the memory management unit;
the second memory is configured to receive the operation result obtained by the coprocessor; and
the scheduler is further configured to: receive a first indication sent by the coprocessor, wherein the first indication indicates that the operation on the first operand is completed; and
process the operation result based on the operation result and an indication of a program.

5. The graphics processing apparatus according to claim 4, wherein the coprocessor comprises a cache, a register, a selector, and a computing unit;
a first end of the cache is coupled to a first end of the selector, a first end of the register is coupled to a second end of the selector, and a third end of the selector is coupled to a first end of the computing unit;
a second end of the computing unit is coupled to the second end of the memory management unit; and
a third end of the computing unit is coupled to the first end of the second memory.

6. The graphics processing apparatus according to claim 5, wherein the shader further comprises an arithmetic logical unit, a first end of the arithmetic logical unit is coupled to a third end of the scheduler, and a second end of the arithmetic logical unit is coupled to a second end of the cache;
the arithmetic logical unit is configured to receive an operation instruction sent by the scheduler, and obtain a second operand through computing according to the operation instruction;
the cache is configured to store the second operand; and
the computing unit is configured to:
receive the first operand from the memory management unit;
receive, from the selector, the second operand from the cache or a third operand in the register, wherein the second operand is a preconfigured constant value; and
obtain the operation result based on the first operand and the second operand, or obtain the operation result based on the first operand and the third operand.

7. The graphics processing apparatus according to claim 6, wherein the computing unit is specifically configured to:
obtain a first intermediate operation result after performing computing on the first operand and the second operand, or obtain a first intermediate operation result after performing computing on the first operand and the third operand; and
add the first intermediate operation result as an addend to at least one other intermediate operation result, to obtain the operation result.

8. The graphics processing apparatus according to any one of claims 5 to 7, wherein the computing unit comprises:
at least one multiplication unit and at least one addition unit, wherein
a single multiplication unit in the at least one multiplication unit is configured to perform a multiply operation;
a single addition unit in the at least one addition unit is configured to perform an add operation; and
a combination of a part of multiplication units in the at least one multiplication unit and a part of addition units in the at least one addition unit is used for a floating-point multiply-add operation or a floating-point multiply-accumulate operation.

9. A graphics processing method, applied to a graphics processing apparatus, wherein the graphics processing apparatus comprises a shader, a memory management unit, and a coprocessor connected between the shader and the memory management unit, and the method comprises:
controlling the shader to send a read instruction to the memory management unit, wherein the read instruction comprises an address of a to-be-read first operand and a first identifier, and the first identifier indicates to perform an operation on the first operand in the coprocessor;
controlling the memory management unit to obtain the first operand from a first memory, and send the first operand to the coprocessor; and
controlling the coprocessor to perform the operation on the first operand, to obtain an operation result.

10. The method according to claim 9, wherein the coprocessor comprises a cache, a register, and a computing unit, the cache stores a second operand, the register stores a third operand, the second operand is obtained by the shader through computing according to an operation instruction, and the third operand is a preconfigured constant value; and
the controlling the coprocessor to perform the operation on the first operand, to obtain an operation result comprises:
controlling the coprocessor to receive the first operand from the memory management unit;
controlling the coprocessor to obtain the second operand in the cache or the third operand in the register; and
controlling the coprocessor to obtain the operation result based on the first operand and the second operand, or obtain the operation result based on the first operand and the third operand.

11. The method according to claim 10, wherein the controlling the coprocessor to obtain the operation result based on the first operand and the second operand comprises:
obtaining a first intermediate operation result after performing computing on the first operand and the second operand, or obtaining a first intermediate operation result after performing computing on the first operand and the third operand; and
adding the first intermediate operation result as an addend to at least one other intermediate operation result, to obtain the operation result.

12. The method according to claim 10 or 11, wherein the computing unit comprises:
at least one multiplication unit and at least one addition unit, wherein
a single multiplication unit in the at least one multiplication unit is configured to perform a multiply operation;
a single addition unit in the at least one addition unit is configured to perform an add operation; and
a combination of a part of multiplication units in the at least one multiplication unit and a part of addition units in the at least one addition unit is used for a floating-point multiply-add operation or a floating-point multiply-accumulate operation.

13. A chip, wherein the chip comprises the graphics processing apparatus according to any one of claims 1 to 8.

14. A computer-readable storage medium, comprising computer instructions, wherein when the computer instructions are run on an electronic device, the electronic device is enabled to perform the method according to any one of claims 9 to 12.
